**Europäisches Patentamt**

**European Patent Office**

**Office européen des brevets**

(19)

(11) Veröffentlichungsnummer: **0 197 453**
**B1**

(12) **EUROPÄISCHE PATENTSCHRIFT**

(45) Veröffentlichungstag der Patentschrift:
**16.08.89**

(51) Int. Cl.⁴: **H04N 7/137**

(21) Anmeldenummer: **86104259.6**

(22) Anmeldetag: **27.03.86**

(54) **Verfahren zur Verbesserung der Bildqualität bei DPCM-codierten Bildsignalen.**

(30) Priorität: **29.03.85 DE 3511714**

(43) Veröffentlichungstag der Anmeldung:
**15.10.86 Patentblatt 86/42**

(45) Bekanntmachung des Hinweises auf die Patenterteilung:
**16.08.89 Patentblatt 89/33**

(84) Benannte Vertragsstaaten:
**AT BE CH DE FR GB IT LI NL SE**

(56) Entgegenhaltungen:
EP-A- 0 095 838
EP-A- 0 104 963
DE-A- 2 559 263
DE-A- 3 311 911
US-A- 4 430 670

TAGUNGSBAND - 10. JAHRESTAGUNG DER FERNSEH-
UND KINOTECHNISCHEN GESELLSCHAFT, 13.-17.
September 1982, München, Seiten 526-548, Mainz, DE;
D. WESTERKAMP et al.: "Digital
Magnetbandaufzeichung von Video- und Audiosignalen
auf einem Videocassettenrecorder" 000
CONFERENCE RECORD ON THE IEEE
INTERNATIONAL CONFERENCE ON
COMMUNICATIONS, 13.-17. Juni 1982, Philadelphia,
Band 2, Seiten 3G.2.1 - 3G2.5, IEEE, New York, US; C.J.

(73) Patentinhaber: **Siemens Aktiengesellschaft,
Wittelsbacherplatz 2, D-8000 München 2(DE)**

(72) Erfinder: **Grallert, Hans-Joachim, Dr. Ing.,
Tannenfleckstrasse 30, D-8038 Gröbenzell(DE)**

(56) Entgegenhaltungen: (Fortsetzung)
HWANG et al.: **"Channel error propagation in adaptive
DPCM coders"**

## Beschreibung

Die Erfindung betrifft ein Verfahren zur Verbesserung der Bildqualität, bei dem digitalisierte Bildsignalwerte unter Verwendung einer mehrdimensionalen, insbesondere einer zweidimensionalen Prädiktion und von umschaltbaren Quantisierungskennlinien in quantisierte DPCM-Werte umgesetzt werden.

Zur Übertragung von Bildsignalen wird zur Verringerung der Übertragungsrate häufig die Differenzpulscodemodulation (DPCM) eingesetzt. Am gebräuchlichsten ist hierbei die zweidimensionale DPCM, bei der ein Schätz- oder Prädiktionswert aus Bildsignalwerten errechnet wird, die an den aktuellen zu verarbeitenden Bildsignalwert angrenzen. Eine DPCM-Codierung mit zweidimensionaler Prädiktion ist bereits erstaunlich leistungsfähig. Um Flächenrauschen (granular noise) und Überschwingen (slope overload) zu vermeiden, wird zwischen mehreren Quantisierungskennlinien umgeschaltet, so daß die Quantisierung bei kleinen Differenzen zwischen Schätzwert und aktuellem Bildsignalwert in kleinen Quantisierungsstufen erfolgt; bei großen Differenzen, wie sie an Kanten auftreten, wird eine gröbere Quantisierung verwendet, wobei jedoch der Quantisierungsfehler aufgrund des Verdeckungseffektes für das menschliche Auge weitgehend unsichtbar ist. Obwohl die zweidimensionale Prädiktion – auch bei Kanten – erstaunliches leistet, so ergeben sich doch bei geometrischen Flächen, wie sie beispielsweise bei Gebäuden oder bei Schriftvorlagen häufig anzutreffen sind, an den Ecken deutlich sichtbare Bildfehler. Diese können durch eine dreidimensionale Prädiktion mit dem hierbei erforderlichen hohen Speicheraufwand verringert werden, bleiben aber störend.

Bekannte Bildfehlerkorrekturverfahren ergeben bei der Übertragung von geometrischen Flächen keine Verbesserungen, häufig jedoch zusätzliche Unschärfen.

Bei einer angestrebten Verbesserung der Bildqualität sollen alle Maßnahmen vermieden werden, die eine Änderung des DPCM-Codierverfahrens oder des Übertragungsverfahrens erforderlich machen.

Aufgabe der Erfindung ist es, ein Verfahren zur Verbesserung der Bildqualität bei DPCM-codierten Bildsignalen anzugeben, bei dem keine Änderung des Prädiktionsalgorithmus auf der Sende- und Empfangsseite notwendig ist.

Ausgehend vom einleitend beschriebenen Stand der Technik wird die Aufgabe dadurch gelöst, daß empfangsseitig jeweils mindestens ein rekonstruierter Bildsignalwert zwischengespeichert und verzögert ausgegeben wird, und daß bei Empfang eines DPCM-Wertes, der dem Maximalwert eines Quantisierungsbereiches der verwendeten Quantisierungskennlinie entspricht, statt des mit diesem DPCM-Wert rekonstruierten Bildsignalwertes ein Korrekturwert ausgegeben wird, der aus nachfolgenden Bildsignalwerten und gegebenenfalls zusätzlich aus dem zu korrigierenden Bildsignalwert ermittelt worden ist.

Die Erfindung setzt die Erkenntnis voraus, daß die bei einer DPCM-Codierung mit nur unzureichender Amplitude übertragenen DPCM-Werte (Differenzen) einfach erkannt werden können. Da die Ausgabe der rekonstruierten Bildsignalwerte verzögert erfolgt, kann statt eines aufgrund der DPCM-Codierung verfälschten Bildsignalwertes ein Korrekturwert ausgegeben werden, der aus den folgenden rekonstruierten Bildsignalwerten oder zumindest vorwiegend aus diesen ermittelt wird. Dies ist deshalb möglich, weil der Fehler relativ rasch abnimmt und bereits nach zirka dem dritten rekonstruierten Bildsignalwert nicht mehr bemerkbar ist. Im Gegensatz zu den bisher bekannten Verfahren wird der Korrekturwert allein aus den nachfolgenden Bildsignalwerten, gegebenenfalls auch zusätzlich aus dem zu korrigierenden Bildsignalwert und nicht wie bisher aus den vorangegangenen oder aus vorangegangenen und nachfolgenden Bildsignalwerten ermittelt.

Es ist zweckmäßig, daß statt des zwischengespeicherten Bildsignalwertes als Korrekturwert der darauffolgende Bildsignalwert ausgegeben wird.

Hier wird bei minimalem Schaltungsaufwand schon eine beträchtliche Verbesserung der Bildqualität erreicht.

Es ist vorteilhaft, daß statt des zwischengespeicherten Bildsignalwertes als Korrekturwert ein Interpolationswert, der unter Berücksichtigung der an den zwischengespeicherten Bildsignalwert angrenzenden, nachfolgenden Bildsignalwerte ermittelt wurde, ausgegeben wird.

Durch die Ermittlung eines Korrekturwertes aus den angrenzenden rekonstruierten Bildsignalwerten können die durch das DPCM-Verfahren bei kritischen Bildstrukturen bedingten Fehler weiter verringert werden. Beschränkt man durch Einbeziehung weiterer Entscheidungskriterien die Anwendung des Verfahrens auf Schriftvorlagen, so kann die Korrektur durch stärkere Berücksichtigung der weiter vom kritischen Bildsignalwert liegenden Bildsignalwerte verbessert werden. Hierdurch werden hohe Kontraste zwischen aneinandergrenzenden Bildpunkten erzielt. Es kann jedoch auch eine gemäßigte Korrektur durchgeführt werden, die Schriftvorlagen mit ausreichender Präzision wiedergibt und bei möglichen Fehlerinterpretationen weniger störend in Erscheinung tritt.

Es ist zweckmäßig, daß die Vorzeichen der Differenzen zwischen dem zwischengespeicherten Bildsignalwert und dem darauffolgenden Bildsignalwert sowie dem zwischengespeicherten Bildsignalwert vorangegangenen Bildsignalwert und dem zwischengespeicherten Bildsignalwert ermittelt werden und daß eine Korrektur nur bei gleichen Vorzeichen durchgeführt wird und daß nur bei gleichbleibendem Vorzeichen korrigiert wird.

Es ist vorteilhaft, daß der Bildsignalwert, der dem vor dem zwischengespeicherten Bildsignalwert liegenden Bildsignalwert zugehörig ist, mit einem Minimalwert verglichen wird und daß eine Korrektur nur durchgeführt wird, wenn dieser DPCM-Wert kleiner als dieser Minimalwert ist.

Durch Verwendung der angeführten Kriterien, wird mit großer Wahrscheinlichkeit sichergestellt, daß keine fehlerhafte Korrektur von Bildsignalwerten erfolgt.

Weitere vorteilhafte Ausbildungen der Erfindung sind in den übrigen Unteransprüchen angegeben.

Das erfindungsgemäße Verfahren wird anhand von Figuren näher erläutert.

Es zeigen

Fig. 1 das Prinzipschaltbild eines DPCM-Coders,
Fig. 2 eine kritische Bildstruktur,
Fig. 3 eine zweite kritische Bildstruktur,
Fig. 4 das Prinzipschaltbild eines DPCM-Decoders,
Fig. 5 ein Prinzipschaltbild der Korrektureinrichtung,
Fig. 6 eine erste Tabelle mit unkorrigierten Bildsignalwerten,
Fig. 7 eine Tabelle mit korrigierten Bildsignalwerten und
Fig. 8 das Prinzipschaltbild einer Steuerlogik.

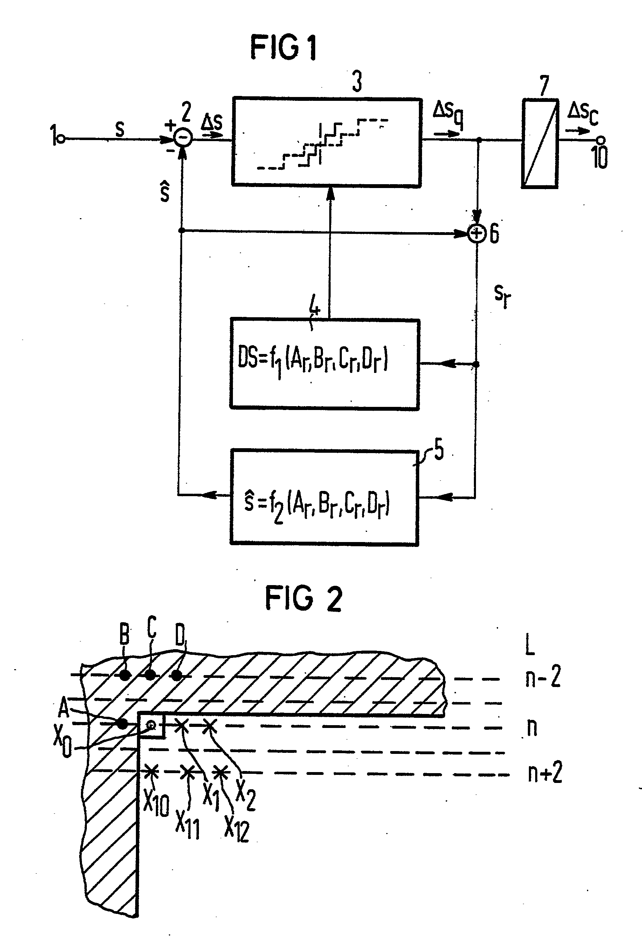

In Fig. 1 ist ein DPCM-Coder dargestellt. Der Codereingang 1 ist über einen Subtrahierer 2 mit dem Eingang eines steuerbaren Quantisierers 3 verbunden, dessen Ausgang an einen Codierer 7 angeschlossen ist, dessen Ausgang mit 10 bezeichnet ist. Außerdem ist der Ausgang des Quantisierers 3 mit dem ersten Eingang eines Addierers 6 verbunden, an dessen Ausgang eine Quantisierersteuerlogik 4 und ein Prädiktor 5 angeschlossen ist, dessen Ausgang mit dem zweiten Eingang des Addierers 6 und mit dem Subtraktionseingang des Subtrahierers 2 verbunden ist.

Dem Codereingang 1 werden die digitalisierten Bildsignalwerte s zugeführt. Durch den Vergleich mit den am Subtraktionseingang des Subtrahierers 2 anliegenden Schätzwerten $\hat{s}$ werden DPCM-Werte $\Delta$ s errechnet, die entsprechend der von der Quantisierersteuerlogik 4 eingestellten Quantisierungskennlinie in quantisierte DPCM-Werte $\Delta s_q$ (Differenzen) umgesetzt werden. Den Quantisierungsstufen werden vom Codierer 7 bestimmte Binärkombinationen zugeordnet, die den quantisierten DPCM-Werten entsprechen und am Coderausgang 10 als codierte DPCM-Werte $\Delta s_c$ ausgesendet werden. Für die Berechnung eines Schätz- oder Prädiktionswertes $\hat{s} = \hat{x}$ gilt beispielsweise (Fig. 2):

$$(1) \quad \hat{x} = \frac{1}{2} A_r + \frac{1}{8} B_r + \frac{1}{4} C_r + \frac{1}{8} D_r$$

Zur Berechnung werden natürlich die rekonstruierten Bildsignalwerte $s_r = A_r, B_r, C_r \ldots$ statt der ursprünglichen Bildsignalwerte s = A, B, C ... verwendet.

Die Quantisierungskennlinie wird von den rekonstruierten Bildsignalwerten $s_r$ bestimmt, die am Ausgang des Addierers 6 anliegen. Der Quantisierer wird hierbei von der größten Differenz zwischen angrenzenden rekonstruierte Bildsignalwerten $A_r$ bis $D_r$ (Fig. 2) gesteuert.

$$(2) \quad DS = \max \left\{ |A_r - B_r|, \quad |A_r - C_r|, \quad |A_r - D_r| \quad |B_r - C_r|, \right.$$
$$\left. |B_r - D_r|, \quad |C_r - D_r| \right\}.$$

Die Quantisierungskennlinien werden nach folgenden Kriterien ausgewählt:

|  |  |  |  |
|---|---|---|---|
|  | DS < 32 | QK1: | ± 55 |
| 32 ≤ | DS < 64 | QK2: | ± 65 |
| 64 ≤ | DS < 96 | QK3: | ± 75 |
| 96 ≤ | DS | QK4: | ± 120 |

In Fig. 2 ist eine für die DPCM-Codierung kritische Bildstruktur dargestellt, wie sie besonders häufig bei der Übertragung von Schriftverlagen auftritt. Die für die Prädiktion und Steuerung der Quantisierungskennlinie verwendeten rekonstruierten Bildsignalwerte $A_r$, $B_r$, $C_r$ und $D_r$ liegen - entsprechend den ursprünglichen Bildsignalwerten - noch im schwarzen Bereich, während der aktuelle zu übertragende Bildsignalwert $X_0$ in der linken oberen Ecke eines weißen Feldes liegt. Den schwarzen Bildsignalwerten entspricht der Wert 0, dem weißen Bildsignalwerten soll hier der Wert 255 entsprechen. Entsprechend Gleichung 2 ergibt sich eine Differenz von Null oder eine sehr kleine Differenz, so daß die erste Quantisierungskennlinie QK1 bei der Codierung des DPCM-Wertes Verwendung findet und somit ein maximaler DPCM-Wert von 55 übertragen wird anstelle eines maximal möglichen DPCM-Wertes von 120 gemäß der Quantisierungskennlinie 4. Zur Darstellung eines korrekten Bildsignalwertes wäre auch ein DPCM-Wert von 255 notwendig, jedoch tritt auch beim menschlichen Auge bei hohen Kontrasten ein Verdeckungseffekt ein, der einen DPCM-Wert von 120 als ausreichend erscheinen läßt.

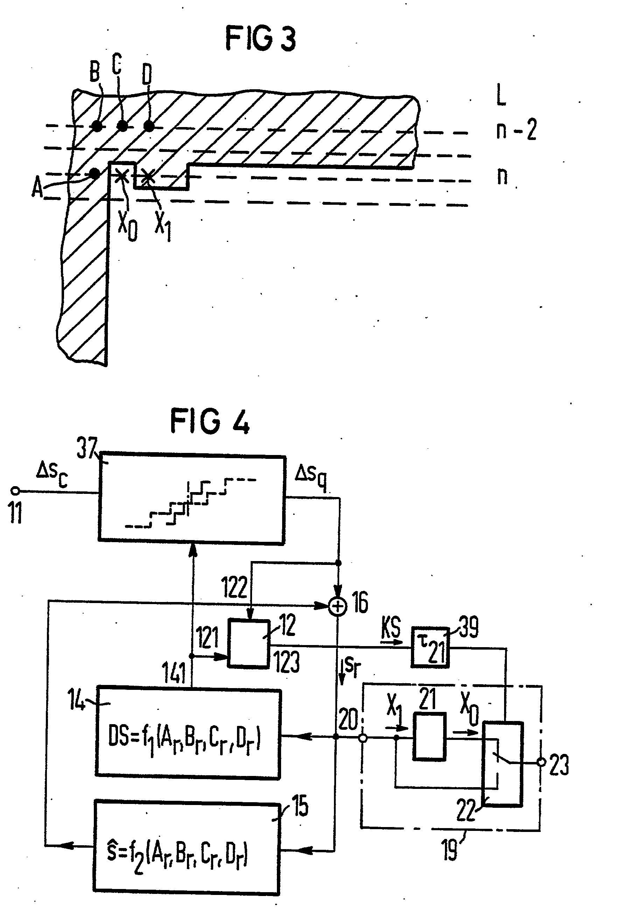

An Stelle des kritischen Bildsignalwertes $X_0 = 55$ kann empfangsseitig beispielsweise der folgende rekonstruierte Bildsignalwert $X_{1r}$ weiterverwendet werden, der dem korrekten Bildsignalwert $X_0$ bereits gut angenähert ist. Diese Verwendung ist jedoch bei Bildstrukturen nach Fig. 3 untersagt, bei denen auf einen hier hellen Bildsignalwert $X_0$ wieder ein schwarzer Bildsignalwert $X_1$ folgt.

Zur Verbesserung der Bildqualität wird empfangsseitig ein üblicher DPCM-Decoder verwendet, bei dem eine Steuerlogik und eine Korrektureinrichtung hinzugefügt wird. Der in Fig. 4 dargestellte DPCM-Decoder enthält eine Decodiereinrichtung 37, deren Eingang über den Decodereingang 11 die codierten PCM-Werte $\Delta s_c$ zugeführt werden. Der Ausgang der Decodiereinrichtung 37 ist mit dem ersten Eingang eines Addierers 16 verbunden, dessen Ausgang mit dem Eingang einer empfangsseitigen Quantisierungssteuerlogik 14 und eines Prädiktors 15 verbunden ist, dessen Ausgang auf den zweiten Eingang des Addierers 16 rückgekoppelt ist. Am Ausgang des Addierers 16 werden die rekonstruierten Bildsignalwerte $s_r$ abgegeben. An dem DPCM-Decoderausgang 20 ist eine Korrektureinrichtung 19 angeschaltet. Sie enthält einen als Laufzeitglied dienenden Speicher 21, dessen Ausgang und Eingang jeweils mit einem Eingang eines Umschalters 22 verbunden sind. Der Ausgang des Umschalters bildet den Ausgang 23 der Korrektureinrichtung.

Zur Steuerung des Umschalters 22 ist eine Steuerlogik 12 vorgesehen, deren erster Eingang 121 an den Ausgang der Quantisierungssteuerlogik 14 angeschaltet ist und deren zweiter Eingang 122 an den Ausgang der Decodiereinrichtung 37 (oder auch an deren Eingang) angeschlossen ist. Der Ausgang 123 ist über ein Laufzeitglied 39 an den Steuereingang des Umschalters 22 geführt. Bei der Korrektur der kritischen Bildsignalwerte erfolgt keinerlei Eingriff in die Rechenvorgänge des DPCM-Decoders. Es werden lediglich die am Decoderausgang 20 abgegebenen Bildsignalwerte geändert bzw. durch Korrekturwerte ersetzt.

Durch die Steuerlogik 12 wird zunächst ermittelt, ob der Maximalwert einer bestimmten Quantisierungskennlinie, z.B. $MA1 = |\pm 55|$ bei der Quantisierungskennlinie QK1 oder 65 bei der Quantisierungskennlinie QK2 empfangen wurde. Außerdem wird ständig überprüft, ob nicht eine in Fig. 3 dargestellte kritische Bildstruktur vorliegt, die eine Korrektur des Bildsignalwertes $X_0$ verhindert. Hierzu wird überprüft, ob die folgende Bedingung gegeben ist:

sign $(A-X_0) = $ sign $(X_0-X_1)$

Diese Überprüfung kann durch Vergleich der Vorzeichen der quantisierten DPCM-Werte $\Delta s_q$ oder der codierten DPCM-Werte $\Delta s_c$ erfolgen (Es kann auch ein Vorzeichenwechsel unter Umständen zugelassen werden, wenn der Betrag der Differenz $X_0-X_1$ unterhalb eines vorgegebenen Schwellwertes liegt). Soll eine Korrektur durchgeführt werden, so wird das am Ausgang 123 der Steuerlogik abgegebene Korrektursignal KS über das Laufzeitglied 39 verzögert, bis der als fehlerhaft erkannte Bildsignalwert $X_0$ am Ausgang des Speichers 21 anliegt. Entspricht die Verzögerungszeit der Korrekturstufe nur dem Abstand zweier empfangener DPCM-Werte, so wird das Laufzeitglied 39 nicht benötigt. Sollten die Bedingungen für eine Korrektur bei dem nächsten rekonstruierten Bildsignalwert $X_1$ ebenfalls erfüllt sein, so wird dieser ebenfalls durch den nächstfolgenden Bildsignalwert $X_2$ ersetzt.

Im allgemeinen wird eine bessere Bildqualität erreicht, wenn der kritische Bildsignalwert $X_0$ durch einen Korrekturwert XK ersetzt wird, der durch Interpolation aus den benachbarten rekonstruierten Bildsignalwerten $X_1$, $X_{10}$ und $X_{11}$ gewonnen wird. Folgende Korrekturwerte können beispielsweise ermittelt werden:

(3) $XK1 = \frac{1}{2}(X_0 + X_1 + X_{10} + X_{11})$ oder

(4) $XK2 = \frac{1}{2} X_1 + \frac{1}{2} X_{10} + \frac{1}{2} X_{11}$

Durch die Korrekturwerte XK1 und XK2 wird eine relativ milde Korrektur durchgeführt, die jedoch die Bildqualität bereits wesentlich verbessert. Stärkere Kontraste werden erzielt, in dem man für den Korrekturwert wählt:

(5) $XK3 = \frac{1}{4} X_0 + \frac{1}{2} X_1 + \frac{1}{4} X_{10} + \frac{1}{4} X_{11}$ oder

(6) $XK4 = \frac{1}{2} X_1 + \frac{1}{2} X_{10} + \frac{1}{4} X_{11}$

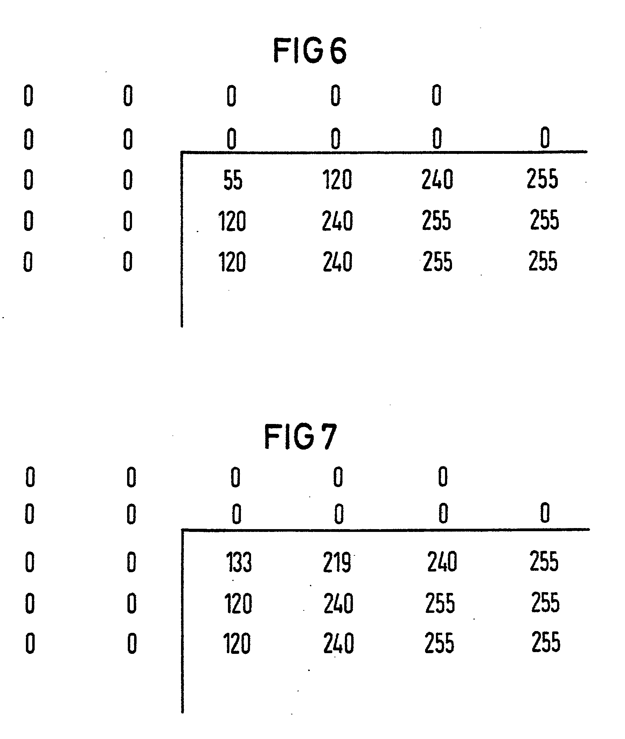

Eine Schaltungsanordnung zur Ermittlung des Korrekturwertes XK1 ist in Fig. 5 dargestellt. Sie enthält im wesentlichen eine Reihenschaltung von 3 Laufzeitgliedern 50, 51 und 52 deren Ein- bzw. Ausgänge mit den Eingängen eines Addierers 54 verbunden sind, dessen Ausgang über einen Multiplizierer 55 auf den ersten Eingang des Umschalters 22 geführt ist. Der Ausgang des Laufzeitgliedes 52 ist über ein weiteres Laufzeitglied 53 mit dem zweiten Eingang des Umschalters 22 verbunden. Die Laufzeitglieder 50 und 52 verzögern jeweils um einen Taktimpuls, der dem Abstand beim Empfang zweier DPCM-Werte entspricht. Das mittlere Laufzeitglied 51 hat dagegen bis auf einen Taktimpuls die Laufzeit $\tau_Z-\tau_1$ einer Bildzeile (Fernsehzeile). In dem Addierer 54 wird die Summe der an den Ausgängen der Laufzeitglieder 52, 51, 50 und am Eingang des Laufzeitgliedes anliegenden Bildsignalwert $X_0$, $X_1$, $X_{10}$ und $X_{11}$ gebildet. Der Multiplizierer 55 wird durch geeignete Verdrahtung zwischen dem Ausgang des Addierers 55 und dem ersten Eingang des Umschalters 22 realisiert. Das zur Kompensation der Additionszeit vorgesehene Laufzeitglied 53 ist im allgemeinen nicht erforderlich.

Anhand der in den Figuren 6 und 7 dargestellten Tabellen soll die Wirkungsweise der nach (3) durchgeführten Berechnung erläutert werden. Jedem in Fig. 2 dargestellten Bildsignalwert ist ein Zahlenwert zugeordnet. Die Bildsignalwerte des schwarzen Bildteils entsprechen dem Zahlenwert Null, die Bildsignalwerte des weißen Bildteiles bei einem maximal möglichen Kontrast erhalten den Zahlenwert 255 zugeordnet. In den Fig. 6 und 7 sind die Zahlenwerte für die rekonstruierten Bildsignalwerte angegeben. Bei der Übertragung des kritischsten Signalwertes $X_0$ wird mit der Quantisierungskennlinie QK1 der maximal mögliche Bildsignalwert von 55 übertragen. Da nun die maximale Differenz DS$\geq$32 aber<64 ist, wird mit der Quantisierungskennlinie QK2 wiederum der damit maximal mögliche Zahlenwert von 65 übertragen usw. Bereits der dritte rekonstruierte Bildsignalwert X3 hat praktisch den korrekten Bildsignalwert von 255 erreicht. In den folgenden Bildzeilen nähern sich die rekonstruierten Bildsignalwerte schneller dem ursprünglichen Bildsignalwert. Aufgrund des Verdeckungseffektes des menschlichen Auges wird bereits ein Bildsignalwert von 120 statt korrekt 255 als nahezu richtig akzeptiert. In der Tabelle nach Fig. 7 sind die Bildsignalwerte dargestellt, die sich durch Interpolation nach Gleichung (3) ergeben. Der besonders empfindlich gestörte Bildsignalwert $X_0$ ist bereits ausreichend korrigiert. Durch Verwendung eines anderen Interpolationsalgorithmus lassen sich die Bildsignalwerte der ersten Spalte des weißen Bildteiles weiter verbessern.

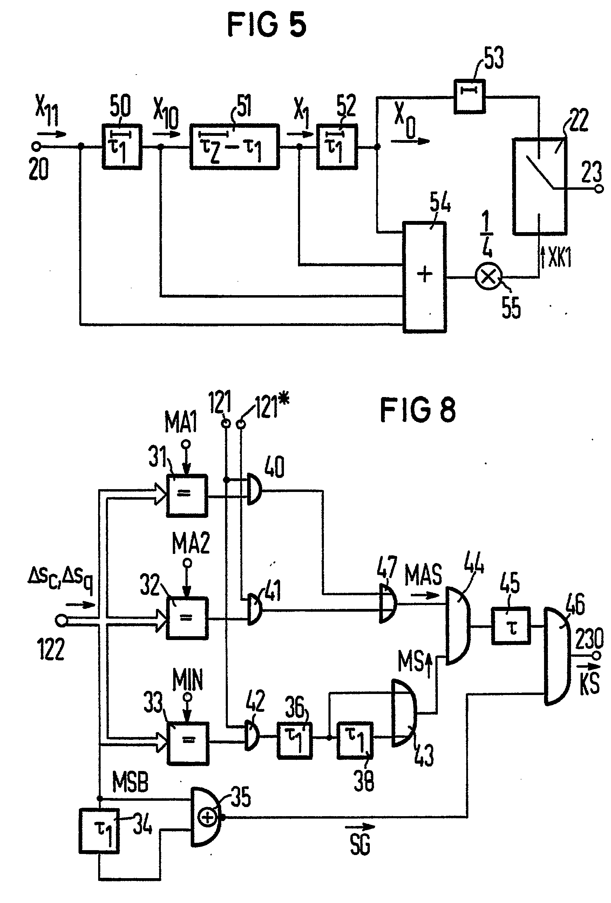

In der Fig. 8 ist ein Ausführungsbeispiel für die Steuerlogik 12 dargestellt. Es wird vorausgesetzt, daß eine Korrektur der kritischen Bildsignalwerte immer dann erfolgen soll, wenn der Maximalwert MA1 der ersten Quantisierungskennlinie QK1 oder der Maximalwert MA2 der zweiten Quantisierungskennlinie QK2 empfangen wird. An den Eingang 122 der Steuerlogik sind die Eingänge dreier Komparatoren 31, 32 und 33 angeschaltet, deren Vergleichseingängen die Maximalwerte MA1, MA2 und ein Minimalwert MIN zugeführt ist. Die Ausgänge der Komparatoren sind jeweils über ein UND-Gatter 40, 41 und 42 geführt. Die zweiten Eingänge der UND-Gatter 40 und 42 sind mit dem Eingang 121 der Steuerlogik verbunden, der Eingang des UND-Gatters 41 ist mit einem Eingang 21* verbunden. Die UND-Gatter 40 und 41 sind über ein ODER-Gatter 47 auf ein weiteres UND-Gatter 44 geführt, während der Ausgang des dritten UND-Gatters 42 über zwei Laufzeitglieder 36 und 38 und über ein ODER-Gatter 43 - dessen Eingänge sind jeweils mit einem Ausgang dieser Laufzeitglieder verbunden - mit dem dritten Eingang des UND-Gatters 44 verbunden sind. Über ein weiteres Laufzeitglied 45 ist der Ausgang des UND-Gatters 44 mit einem weiteren UND-Gatter 46 verbunden, dessen Ausgang 230 dem Ausgang 23 der in Fig. 4 dargestellten Steuerlogik entspricht. Das Vorzeichenbit MSB des am Eingang 122 anliegenden DPCM-Wertes ist direkt und über ein Laufzeitglied 34 mit den Eingängen eines EXKLUSIVE-NOR-Gatters 35 verbunden, dessen Ausgang mit dem zweiten Eingang des UND-Gatters 46 verbunden ist.

Durch die Komparatoren 31 und 32 und deren nachgeschaltete UND-Gatter 40 bzw. 41 wird überprüft, ob ein Maximalwert MA1 oder MA2 bei der entsprechenden eingestellten Quantisierungskennlinie (Eingänge 121, 21*) vorliegt. Der dritte Komparator 33 hat bereits überprüft, ob die bereits empfangenen DPCM-Werte betragsmäßig unterhalb des Minimums MIN (oder bei Null) lagen, wie dies beispielsweise bei Textvorlagen der Fall ist. Das Ergebnis dieser Überprüfung wird über die Laufzeitglieder 36 und 38 verzögert, so daß sie bei einer Korrekturentscheidung bei dem kritischen Bildsignalwerten $X_0$ und $X_1$ vorliegt. Dies Minimumsignal MS wird mit einem Maximumsignal MAS über das UND-Gatter 44 logisch verknüpft und über das Laufzeitglied 45 um einen Takt verzögert. Über das EXKLUSIV-NOR-Gatter 35 wird überprüft, ob das Vorzeichen der zu den Bildsignalwerten $X_0$ und $X_1$ zugehörigen DPCM-Werte wechselt. Ist dies nicht der Fall, so wird das Vorzeichensignal SG über das UND-Gatter 46 logisch verknüpft.Bei Eintreten aller bereits beschriebenen Bedingungen wird am Ausgang des UND-Gatters 46 ein Korrektursignal KS abgegeben, das dem Umschalter 23 betätigt.

Die Steuerlogik kann ohne Schwierigkeiten an den jeweils verwendeten Interpolationsalgorithmus und an die jeweiligen Korrekturbedingungen angepasst werden. Es ist natürlich ebenso möglich, statt der quantisierten DPCM-Werte $\Delta s_q$ die codierten DPCM-Werte $\Delta s_c$ auszuwerten. Hierbei kann unter Umständen auch auf die UND-Gatter 40, 41 und 42 verzichtet werden.

**Patentansprüche**

1. Verfahren zur Verbesserung der Bildqualität, bei dem digitalisierte Bildsignalwerte (s) unter Verwendung einer mehrdimensionalen, insbesondere einer zweidimensionalen Prädiktion und von umschaltbaren Quantisierungskennlinien (QK1 bis QK4) in quantisierte DPCM-Werte ($\Delta s_q$) umgesetzt werden, dadurch gekennzeichnet, daß empfangsseitig jeweils mindestens ein rekonstruierter Bildsignalwert ($s_r = X_0$) zwischengespeichert und verzögert ausgegeben wird, und daß bei Empfang eines DPCM-Wertes ($\Delta s$), der dem Maximalwert (MA1, MA2, . . .) eines Quantisierungsbereiches der verwendeten Quantisierungskennlinie (QK1, QK2, . . .) entspricht, statt des mit diesem DPCM-Wert ($\Delta s$ = MA1, MA2, . . .) rekonstruierten Bildsignalwertes ($X_0$) ein Korrekturwert (XK) ausgegeben wird, der aus nachfolgenden Bildsignalwerten ($X_9$, $X_{10}$, $X_{11}$) und gegebenenfalls zusätzlich aus dem zu korrigierenden Bildsignalwert ($X_0$) ermittelt worden ist.

2. Verfahren nach Anspruch 1, dadurch gekennzeichnet, daß statt des zwischengespeicherten Bildsignalwertes ($X_0$) als Korrekturwert (XK) der darauffolgende Bildsignalwert ($X_1$) ausgegeben wird.

3. Verfahren nach Anspruch 1, dadurch gekennzeichnet, daß statt des zwischengespeicherten Bildsignalwertes ($X_0$) als Korrekturwert (XK) ein Interpolationswert, der unter Berücksichtigung der an den zwischengespeicherten Bildsignalwert ($X_0$) angrenzenden nachfolgenden Bildsignalwerte ($X_1$, $X_{10}$, $X_{11}$) ermittelt wurde, ausgegeben wird.

4. Verfahren nach Anspruch 3, dadurch gekennzeichnet, daß der Interpolationswert aus dem zwischengespeicherten Bildsignalwert ($X_0$), den darauf folgenden Bildsignalwert ($X1$) und den beiden entsprechenden Bildsignalwerten ($X_{10}, X_{11}$) der nächsten Fernsehzeile ermittelt wird.

5. Verfahren nach Anspruch 4, dadurch gekennzeichnet, bei der Ermittlung des Interpolationswertes (IK) der zwischengespeicherte Bildsignalwert ($X_0$) unberücksichtigt bleibt.

6. Verfahren nach Anspruch 3, dadurch gekennzeichnet, daß Interpolationswert

$$XK1 = \frac{1}{8} X_0 + \frac{1}{4} X_1 + \frac{1}{8} X_{10} + \frac{1}{2} X_{11}$$

ermittelt wird.

7. Verfahren nach einem der vorhergehenden Ansprüche, dadurch gekennzeichnet, daß nur bei Empfang der Maximalwerte (MA1, MA2) der beiden feinsten Quantisierungskennlinien (QK1, QK2) eine Korrektur durchgeführt wird.

8. Verfahren nach einem der Ansprüche 1 bis 6, dadurch gekennzeichnet, daß nur bei Empfang des Maximalwertes (MA1) der feinsten Quantisierungskennlinie (QK1) eine Korrektur durchgeführt wird.

9. Verfahren nach einem der vorhergehenden Ansprüche, dadurch gekennzeichnet, daß die Vorzeichen der Differenzen zwischen dem zwischengespeicherten Bildsignalwert ($X_0$) und dem darauffolgenden Bildsignalwert ($X_1$) sowie dem dem zwischengespeicherten Bildsignalwert ($X_0$) vorangegangenen Bildsignalwert (A) und dem zwischengespeicherten Signalwert ($X_0$) ermittelt werden und daß eine Korrektur nur bei gleichen Vorzeichen (sign ($X_0$-$X_1$) = sign ($A_0$-$X_0$)) durchgeführt wird.

10. Verfahren nach einem der vorhergehenden Ansprüche, dadurch gekennzeichnet,
daß der DPCM-Wert ( $\Delta$s), der dem vor dem zwischengespeicherten Bildsignalwert ($X_0$ liegenden Bildsignalwert (A) zugehörig ist mit einem Minimalwert (MIN) verglichen wird
und daß eine Korrektur nur durchgeführt wird, wenn dieser DPCM-Wert kleiner als dieser Minimalwert (MIN) ist.

**Claims**

1. Method for improving the picture quality, in which digitized picture signal values (s) are converted into quantized DPCM values ($\Delta s_q$), using a multidimensional, particularly a two-dimensional prediction and switchable quantization characteristics (QK1 to QK4), characterized in that in each case at least one reconstructed picture signal value ($s_r = X_0$) is temporarily stored and output with delay on the receiving side, and that on reception of a DPCM value ($\Delta$s) which corresponds to the maximum value (MA1, MA2, . . .) of a quantization range of the quantization characteristic (QK1, QK2, . . .) used, instead of the picture signal value ($X_0$) reconstructed with the aid of this DPCM value ($\Delta$s = MA1, MA2, . . .), a correction value (XK) is output which has been determined from subsequent picture signal values ($X_9$, $X_{10}$, $X_{11}$) and, if necessary, additionally from the picture signal value ($X_0$) to be corrected.

2. Method according to Claim 1, characterized in that, instead of the temporarily stored picture signal value ($X_0$), the picture signal value ($X_1$) following it is output as correction value (XK).

3. Method according to Claim 1, characterized in that, instead of the temporarily stored picture signal value ($X_0$), an interpolation value, which has been determined taking into consideration the subsequent picture signal values ($X_1$, $X_{10}$, $X_{11}$) adjoining the temporarily stored picture signal value ($X_0$), is output as correction value (XK).

4. Method according to Claim 3, characterized in that the interpolation value is determined from the temporarily stored picture signal value ($X_0$), the picture signal value ($X_1$) following it and the two corresponding picture signal values ($X_{10}$, $X_{11}$) of the next television line.

5. Method according to Claim 4, characterized in that the temporarily stored picture signal value ($X_0$) is left unconsidered in the determination of the interpolation value (IK).

6. Method according to Claim 3, characterized in that the interpolation value

$$XK1 = \frac{1}{8} X_0 + \frac{1}{4} X_1 + \frac{1}{8} X_{10} + \frac{1}{2} X_{11}$$

is determined.

7. Method according to one of the preceding claims, characterized in that a correction is performed only when the maximum values (MA1, MA2) of the two finest quantization characteristics (QK1, QK2) are received.

8. Method according to one of Claims 1 to 6, characterized in that a correction is performed only when the maximum value (MA1) of the finest quantization characteristic (QK1) is received.

9. Method according to one of the preceding claims, characterized in that the signs of the differences between the temporarily stored picture signal value ($X_0$) and the picture signal value ($X_1$) following it,

and the picture signal value (A) preceding the temporarily stored picture signal value (X₀) and the temporarily stored signal value (X₀) are determined and that a correction is only performed with identical signs (sign (X₀–X₁) = sign (A₀–X₀)).

10. Method according to one of the preceding claims, characterized in that the DPCM value ($\Delta s$), which belongs to the picture signal value (A) located in front of the temporarily stored picture signal value (X₀) is compared with a minimum value (MIN) and that a correction is only performed when this DPCM value is smaller than this minimum value (MIN).

**Revendications**

1. Procédé pour améliorer la qualité de l'image, selon lequel, des valeurs numérisées (s) d'un signal d'image sont converties en des valeurs MICD quantifiées ($\Delta s_q$), moyennant l'utilisation d'une prédiction multidimensionnelle, notamment d'une prédiction bidimensionnelle et de courbes caractéristiques commutables de quantification (QK1 à QK4), caractérisé par le fait que, côté réception, au moins une valeur reconstituée ($s_r = X_0$) du signal d'image est mémorisée temporairement et est délivrée de façon retardée, et que, lors de la réception d'une valeur MICD ($\Delta s$), qui correspond à la valeur maximale (MA1, MA2, . . .) d'une plage de quantification de la courbe caractéristique de quantification utilisée (QK1, QK2, . . .), à la place de la valeur (X₀) du signal d'image, reconstituée avec cette valeur MICD ($\Delta s$ = MA1, MA2, . . .) se trouve délivrée une valeur de correction (XK), qui a été obtenue à partir des valeurs suivantes (X₉, X₁₀, X₁₁) du signal d'image et éventuellement, en supplément, à partir de la valeur (X₀), devant être corrigée, du signal d'image.

2. Procédé suivant la revendication 1, caractérisé par le fait qu'à la place de la valeur mémorisée (X₀) du signal d'image, la valeur suivante (X₁) du signal d'image est délivrée en tant que valeur de correction (XK).

3. Procédé suivant la revendication 1, caractérisé par le fait qu'à la place de la valeur mémorisée temporairement (X₀) du signal d'image, une valeur d'interpolation, qui a été déterminée en tenant compte des valeurs suivantes (X₁, X₁₀, X₁₁) du signal d'image, qui sont adjacentes à la valeur mémorisée temporairement (X₀) du signal d'image, est délivrée en tant que valeur de correction (XK).

4. Procédé suivant la revendication 3, caractérisé par le fait que la valeur d'interpolation est déterminée à partir de la valeur mémorisée temporairement (X₀) du signal d'image, de la valeur (X₁) du signal d'image, qui succède à la précédente, et des deux valeurs correspondantes (X₁₀, X₁₁) du signal d'image, de la ligne de télévision immédiatement suivante.

5. Procédé suivant la revendication 4, caractérisé par le fait que, lors de la détermination de la valeur d'interpolation (Y), la valeur mémorisée temporairement (X₀) du signal d'image n'est pas prise en compte.

6. Procédé suivant la revendication 3, caractérisé par le fait que la valeur d'interpolation est déterminée.

$$XK1 = \frac{1}{8} X_0 + \frac{1}{4} X_1 + \frac{1}{8} X_{10} + \frac{1}{2} X_{11}.$$

7. Procédé suivant l'une des revendications précédentes, caractérisé par le fait qu'une correction est exécutée uniquement lors de la réception des valeurs maximales (MA1, MA2) des deux courbes caractéristiques (QK1, QK2) les plus fines.

8. Procédé suivant l'une des revendications 1 à 6, caractérisé par le fait qu'une correction est exécutée uniquement lors de la réception de la valeur maximale (MA1) de la courbe caractéristique de quantification (QK1) la plus fine.

9. Procédé suivant l'une des revendications précédentes, caractérisé par le fait que les signes des différences entre la valeur mémorisée temporairement (X₀) du signal d'image et la valeur suivante (X₁) de ce signal ainsi qu'entre la valeur (A) du signal d'image, qui précède la valeur mémorisée temporairement (X₀) du signal d'image, et la valeur mémorisée temporairement (X₀) de ce signal, sont déterminées et qu'une correction est exécutée uniquement lorsque les signes sont égaux (signe (X₀–X₁) = signe (A₀–X₀)).

10. Procédé suivant l'une des revendications précédentes, caractérisé par le fait que la valeur MICD ($\Delta s$), qui est associée à la valeur (A) du signal d'image, présente avant la valeur mémorisée temporairement (X₀) de ce signal, est comparée à une valeur minimale (MIN), et qu'une correction n'est exécutée que lorsque cette valeur MICD est inférieure à cette valeur minimale (MIN).

EP 0 197 453 B1

## FIG 1

## FIG 2

## FIG 3

## FIG 4

# FIG 6

|   |   |     |     |     |     |
|---|---|-----|-----|-----|-----|
| 0 | 0 | 0   | 0   | 0   |     |
| 0 | 0 | 0   | 0   | 0   | 0   |
| 0 | 0 | 55  | 120 | 240 | 255 |
| 0 | 0 | 120 | 240 | 255 | 255 |
| 0 | 0 | 120 | 240 | 255 | 255 |

# FIG 7

|   |   |     |     |     |     |
|---|---|-----|-----|-----|-----|
| 0 | 0 | 0   | 0   | 0   |     |
| 0 | 0 | 0   | 0   | 0   | 0   |
| 0 | 0 | 133 | 219 | 240 | 255 |
| 0 | 0 | 120 | 240 | 255 | 255 |
| 0 | 0 | 120 | 240 | 255 | 255 |

# FIG 5

# FIG 8